# EUROPEAN PATENT SPECIFICATION

(11) **EP 1 069 816 B1**
(45) Date of publication and mention of the grant of the patent: **27.12.2006**
(21) Application number: 99907830.6
(22) Date of filing: 11.03.1999
(51) Int. Cl.: A01D 34/64

(54) **MOTION IMPROVEMENTS IN LAWN MOWERS**
BEWEGUNGSVERFAHREN FÜR RASENMÄHER
AMELIORATIONS RELATIVES AU DEPLACEMENT, DANS DES TONDEUSES A GAZON

(30) Priority: 12.03.1998 US 77678 P
(43) Date of publication of application: 24.01.2001
(73) Proprietor: Friendly Robotics Ltd., Even Yehuda 40500 (IL)
(72) Inventor: LEVIN, Shalom, 30300 Atlit (IL); ABRAHMSON, Shai, 60417 Neve Savion (IL); PELESS, Ehud, 40500 Even Yehuda (IL)
(74) Representative: Murray, Elisabeth Anne
(86) International application number: PCT/IL1999/000140
(87) International publication number: WO 1999/045757

(56) References cited:
- FR-A- 2 748 364
- US-A- 3 063 226
- US-A- 3 839 919
- US-A- 4 120 136
- US-A- 5 090 184
- US-A- 5 209 050
- US-A- 5 305 588
- US-A- 5 816 033
- US-E- R E35 393

## Description

### FIELD OF THE INVENTION

The present invention relates in general to machines for performing work and in particular to machines for performing routine floor care tasks, routine agricultural tasks, or routine gardening tasks, but most particularly to lawn mowers.

### BACKGROUND OF THE INVENTION

Many walk-behind lawn mowers have been proposed in the past. Some of these are push lawn mowers, others are self-propelled lawn mowers, and still others are even autonomous lawn mowers. A common disadvantage of these lawn mowers is that the blade housing rides at a fixed height above the lawn mower's wheels. Indeed in many lawn mowers the height can be sleeted by the operator, but once this is done, the lawn mower maintains the fixed height even in dense or high grass. This often results in increased friction and resistance to mower motion and cutting in the case of, for example, dense, high or uneven grass.

An additional common disadvantage of the above mentioned lawn mowers is a horizontal or partially horizontal cutting blade, which causes increased friction to mower motion when cutting high or dense grass and also increases the power requirement for rotating such blade.

Yet another common disadvantage of the above mentioned lawn mowers is fixed front and rear wheels, which limit the ability of the lawn mower to turn. Indeed, the operator of such a lawn mower has to apply significant force in order to turn the mower, or alternatively raise the front wheels of the lawn mower in order to turn it.

Another common disadvantage of the above mentioned lawn mowers is the fact that the wheels tend to collect mud and cut grass in such a way that impairs and limits the motion of the mower and requires the user to remove the mud from the wheels manually in order for the mower to once again move efficiently.

US 3063226 describes a mower having a cutting unit. The cutting unit comprises a housing. A pair of ground shoes are secured to the housing; the shoes do not ordinarily touch the ground. When an obstacle is engaged by the shoe, the cutting unit is raised.

FR 2748364 describes a shredder for plants; the shredder has a casing fitted with lateral skids. The casing is attached to rods which allow the casing to pivot and move.

### SUMMARY OF THE INVENTION

While the present invention is particularly adopted for use in lawn mowers, certain aspects of the invention are equally applicable to other types of machines and vehicles which need to move indoors and outdoors in order to perform certain tasks. The motion improvements for the present invention overcome limitations associated with prior art appliances.

A self-adjusting blade housing, blade, and motor (hereafter "the housing") are described. This housing automatically accommodates the terrain, grass height, and density in a manner which maintains constant low friction to the machine's motion, as well as to the cutting action.

An aspect of the invention provides an apparatus for adjusting to the level of the ground comprising:
a housing member, said housing member adapted for accommodating instrumentation and including a main body in communication with at least one ground contacting member; and
a suspension system movably attached to said housing member, said suspension system adapted for connection to a chassis, said suspension system adapted for adjusting the level of instrumentation in correspondence with the contour of the ground surface, within said housing member when said ground contacting member is in contact with the ground.

According to an aspect of the invention, there is provided a lawnmower comprising:
a chassis supported by a plurality of rolling members;
a housing member, said housing member including a main body in communication with at least one ground contacting member;
a suspension system movably attached to said housing member, said suspension system operably coupled to said chassis;
a blade, said blade enveloped by said housing member and said blade operatively coupled to said suspension system; and
a force applying member in communication with said suspension system, to provide an offsetting force to that produced by the suspension system when said at least one ground contacting member is in contact with the ground.

An efficient cutting and mulching blade is also described. This blade overcomes the limitations of prior art by engaging the grass along the diagonal cutting blade only, while the rest of the structure of the blade is raised above the grass.

A two-degree-of-freedom castor wheel is described, which uses the castor wheel as a single front wheel. Such a castor wheel allows easy turning of the mower and provides better ground holding on uneven terrain than conventional one-degree-of-freedom castor wheels.

A self-cleaning wheel is also described. This wheel overcomes the drawbacks of previous wheels by self-cleaning the mud and grass that typically stick to the wheel during outdoor operation.

### BRIEF DESCRIPTION OF THE DRAWINGS

The present invention and its detailed description will be understood and appreciated more fully by referring to the attached drawings, wherein corresponding or like numerals or characters indicate corresponding or like components. The drawings are as follows.
Fig. 1 is a bottom view of a preferred embodiment of the self-adjusting blade and its housing.
Fig. 2 is a cross-section A-A, of a preferred embodiment of the housing. Also specified in Fig. 2 is the ground reference on which the blade housing rests.
Fig. 3 is a detailed view of cross section A-A. This figure illustrates in detail the mechanical suspension system which, in a preferred embodiment of the invention, is used to suspend the self-adjusting blade housing and allow the self-adjusting action.
Fig. 4 is an illustration of a cutting and mulching blade.
Fig. 5 is an alternative cutting and mulching blade.
Figs. 6A-6C are top, front and side views, respectively, of the efficient cutting and mulching blade, and also indicates the angles, α, β, γ, δ, which are important to understanding the functionality of the blade.
Fig. 7 is a description of the two-degrees-of-freedom castor wheel and also indicates the angles ββ and γγ, which are important to understanding the functionality of the two-degrees-of-freedom castor wheel.
Figs. 8A and 8B are partial cross-sectional (along line AA-AA) and side views, respectively, of the self-cleaning wheel.

### DETAILED DESCRIPTION OF THE INVENTION

While the present invention is particularly adapted for use in lawn mowers, certain aspects of the invention are equally applicable to other types of machines, self-propelled vehicles, push vehicles, or sit-upon vehicles.

Therefore, the words"lawn mower"are hereafter used, whenever applicable, to include other types of machines operable in substantially the same manner.

Accordingly, the present invention as particularly adapted for use in lawn mowers is exemplary only.

The present invention, as adapted for lawn mowers, may be employed with conventional lawn mower wheels, including rollers and the like, and chassis systems. The present invention includes an apparatus for use within this conventional lawnmower construction, that rides along the ground.

In accordance with the specific terrain (terrain level), over which that lawnmower is traveling at the instant time, such as bumps, slopes, dips, indentations, thick grass or vegetation, or sparse grass or vegetation, the apparatus adjusts the height (or level) of the cutting blade (or other instrumentation depending on the device), raising or lowering in correspondence with the ground, particularly, the ground level. This allows for grass, vegetation or the like to be cut to a substantially uniform height, over the entire desired cutting or work area.

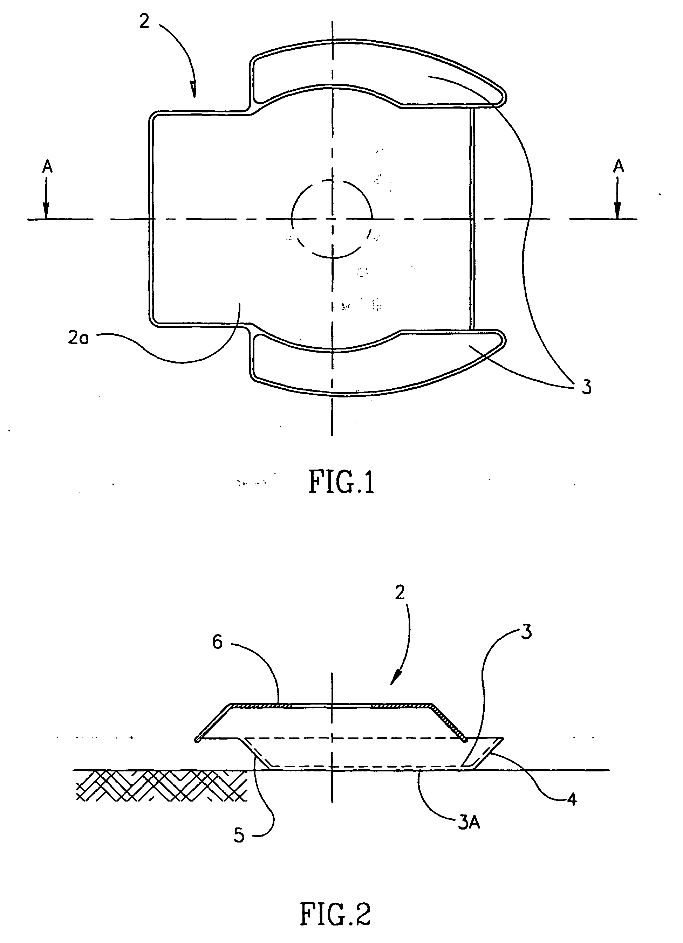

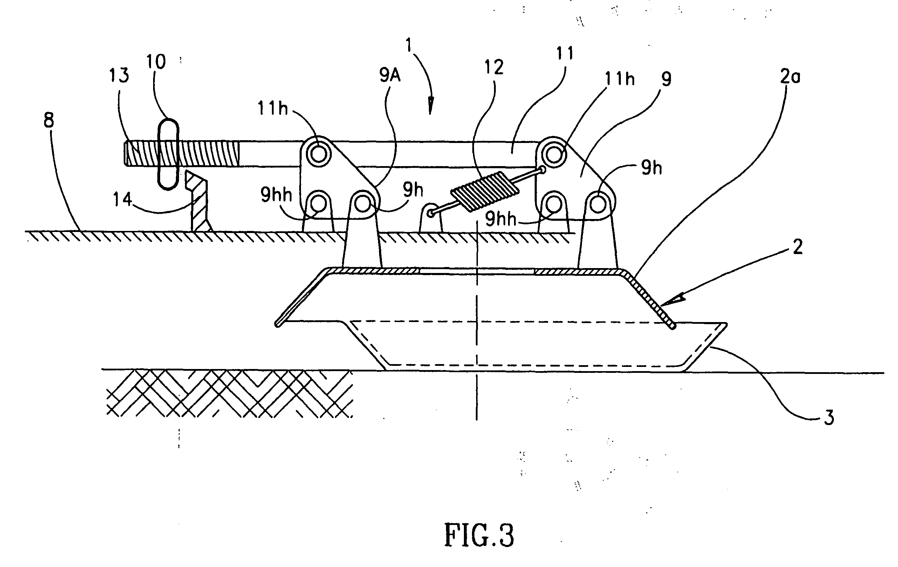

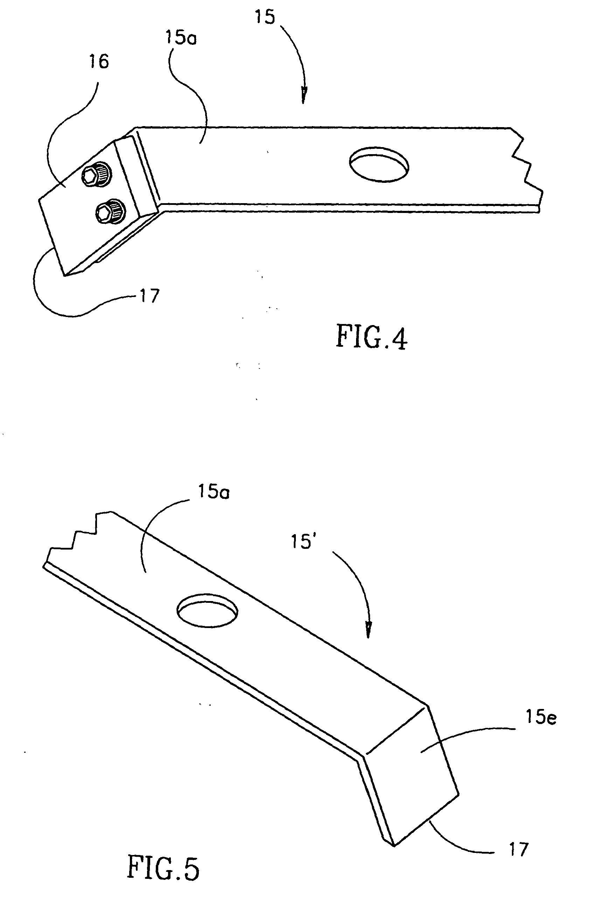

Reference is now made to Figs. 1, 2 and 3, which illustrate a preferred embodiment of the apparatus 1 (Fig. 3) of the present invention that includes a self-adjusting blade (not shown, detailed in Figs. 4, 5 and 6A-6C below) and blade housing 2. Fig. 1 is a bottom view of the blade housing 2 (or housing). The housing 2 is preferably an integral member, formed of a main body section 2a, which houses the cutting blade itself (not shown), and riding cushions 3, which lie on the terrain or grass on which the housing travels and initiate the self-adjusting operation of the apparatus.

Fig. 2 is a side view of a preferred embodiment of the self-adjusting blade and blade housing. The riding cushions 3 are shown making contact with the ground along surface 3A and comprising leading and trailing diagonal surfaces 4 and 5 which allow motion in both directions. The main body of the housing is also indicated as 6. (A section of the housing is indicated in Fig. 3). The blade housing 2 (Fig. 3) is suspended from a fixed element 8 on the chassis, or body of the machine, here a lawnmower, by means of two triangle-shaped parts 9 and 9A. These parts (9 and 9A) are connected by hinges 9h to the housing 2 and by separate hinges 9hh to the fixed surface on the body of the machine. The two triangle-shaped components are also connected to one another by rod 11, via hinges 11 h.

As will be obvious to the professional reader, this suspension system allow the housing to rest freely on the surface of the ground. However, the housing has several centimeters of up-and-down motion freedom, which allow it to raise itself if forced by the ground or dense grass, and to lower itself into low ground areas or areas with sparse grass cover.

As will also be obvious to the professional reader, this suspension mechanism may also comprise more than two connecting elements, such as three or more connecting elements on the same rod or additional rods that are necessary to bear the weight of the housing and still allow friction-free suspension. The housing 2 may also be suspended by similar independent connecting elements that are themselves not connected by a rod.

A spring 12 offsets the weight of the housing in such a way that the tension of the spring determines the amount of ground force required in order to raise the housing 2. Typically, the suspension system will be offset by the spring so that an upward moving force of no more than 2 to 5 kg will be needed to raise the housing 2. However, as will be obvious to the professional reader, the mechanism can be adjusted to any necessary upward moving force by controlling the tension of spring 12.

The suspension system also comprises a mechanism for manually controlling the minimum height of the housing. When the housing 2 is at its lowest point, nut 10 comes in contact with stopper 14 (that extends from the fixed element 8 of the chassis) and thereby prevents the housing 2 from coming down any further. By rotating nut 10 left or right against screw 13, which is a continuation of rod 11, the lowest point of the housing can be controlled. This adjustment allows the user to control the cutting height of the lawn mower. As would be apparent to the professional reader, the same height control mechanism can also be realized by a continuous motion lever or lever with multiple, fixed positions.

Reference is now made to Figs. 4, 5 and 6A-6C, which illustrate preferred embodiment blades 15, 15', 15" for cutting and/or mulching.

Figs. 4 and 5 indicate two alternative preferred embodiments of cutting and/or mulching blades 15, 15', respectively. The main body 15a of these cutting blades 15, 15', is raised above the grass (or vegetation) to minimize the friction during cutting and motion. Contact with the grass is made by a small component (cutting element) 16 (Fig. 4), typically attached to the main body 15a. or the blade ends 15e (Fig. 5), both of which are lowered at an angle from the main body 15a of the respective cutting blades 15, 15'. Cutting is done only along the respective cutting edges 17 of each of the blades 15, 15'.

As shown in Fig. 4, there is indicated one possible embodiment of the cutting and mulching blade, in which the cutting element 16 is a separate element which is screwed to the main body 15a of the blade. 15 This has the advantage that the cutting element itself is easily replaceable without requiring replacement of the entire blade. An alternative embodiment shows a blade 15', in which the cutting edge 17 is part of the entire cutting element, as indicated in Fig. 5.

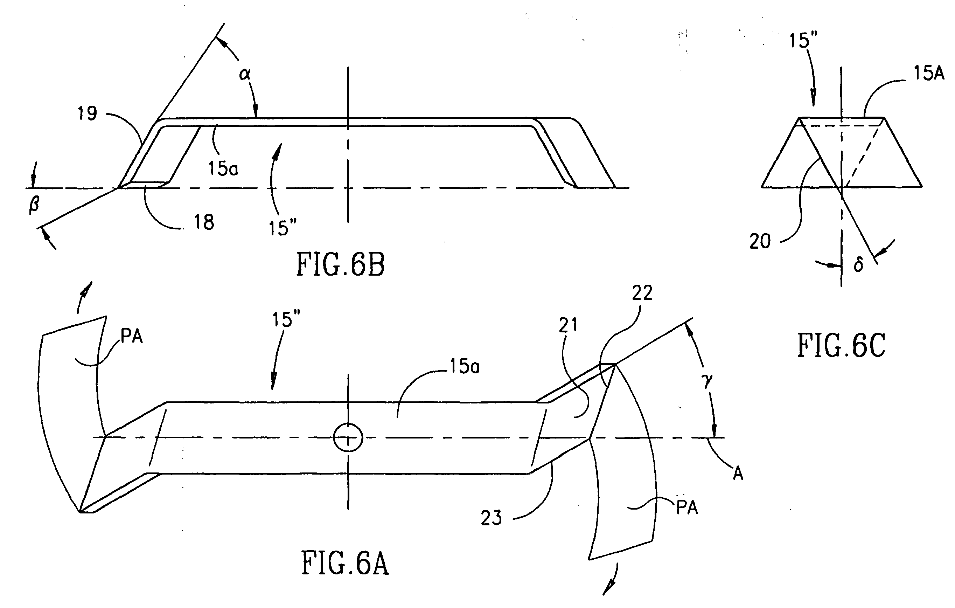

Figs. 6A, 6B, and 6C are three views of one preferred embodiment of the efficient cutting and mulching blade 15". Fig. 6A is a top view, Fig. 6B a front view and Fig. 6C a side view of the blade 15". Fig. 6A indicates the cutting surface 21, which cuts along the bottom side of the surface indicated as 22 in the drawing. As seen in Fig. 6A, edge 22 is tilted by angle γ from the straight symmetric line A' of the blade 15", consequently generating a pitch area (PA) indicated in the drawing. This pitch area is typically 1-2 centimeters wide-although any pitch width is possible-and is, in effect, the foot-print of the blade on the grass. This means that the grass that is cut upon any turn of the blade 15" is the grass that is at that time located within the pitch area. As will be apparent to the professional reader, the blade 15" only makes contact with the grass along cutting edge 22 and, to some extent, leading edge 23, whereas the rest of the blade 15" is raised above the grass. It will also be apparent to the professional reader that grass cutting is done by a scissoring action, which results in a smoother cut.

Reference is now made to Fig. 6B, which shows that cutting edge 18 has a blade angle, β, which is a further improvement over the sharpness of the cutting edge and further minimizes the friction between the rotating blade and the grass. Fig. 6B also shows that leading edge 19 of the blade 15" is tilted from the main body 15a of the blade by angle α. This tilt enables the mulching function of the blade, given that the grass is cut initially by edge 18, thrown up by the tilted surface of the blade, and cut again on its way down by edge 23, shown in Fig. 6A.

Reference is now made to Fig. 6C, which shows that the leading edge 20 of blade 15" in Fig. 6C is further tilted relative to the main symmetrical line A' of the blade 15", indicated by angle δ. This is important in order to prevent grass clippings from sticking to the leading edge of the blade 15". Due to angle γ, grass clippings that come in contact with the leading edge 20 of the blade 15" are cut again and forced into the grass.

Another blade that is preferred for use with the present invention is the blade disclosed in commonly assigned Israel Patent Application No. 124999, entitled: CUTTING AND MULCHING BLADE AND DEVICE, filed on June 18, 1998. This Israel Patent Application is incorporated by reference in its entirety herein.

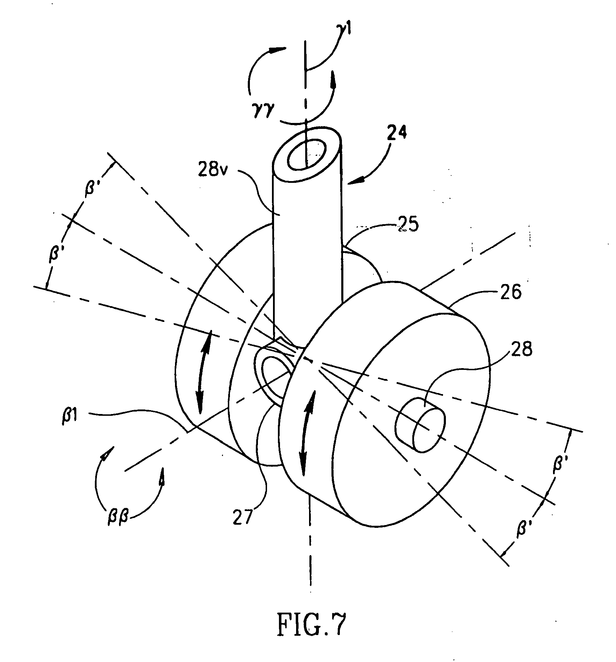

Reference is now made to Fig. 7, which details a preferred embodiment of a two-degrees-of-freedom castor wheel 24. The preferred embodiment of the two-degrees-of-freedom castor wheel 24 comprises two wheels, 25 and 26, which are rotatably connected to a common axis 28. It will be apparent to the professional reader that any number of wheels can be used in alternative embodiments. In previous descriptions of the castor wheels it has been indicated that the castor wheels are rotatable along the common axis, 28, as well as along the vertical axis 28v. This rotation, about axis γl, is indicated by circular arrows (lines) γγ*.*

The two-degrees-of-freedom castor wheel 24 comprises a second axis 27, and wheels 25 and 26, which are rotatably contacted to the second axis 27, which is itself rotatably connected to the vertical axis 28v. This second axis 27 allows the castor wheels 25, 26 to rotate not only along circular lines γγ, but also along circular lines (or arrows) ββ, with a rotation freedom of ± β'. This additional degree of freedom improves the stability of the machine and its ability to hold the ground in uneven terrain, rough terrain, or dense grass, by allowing both castor wheels to maintain good holding and good friction against the ground even when tilted along the β1 axis.

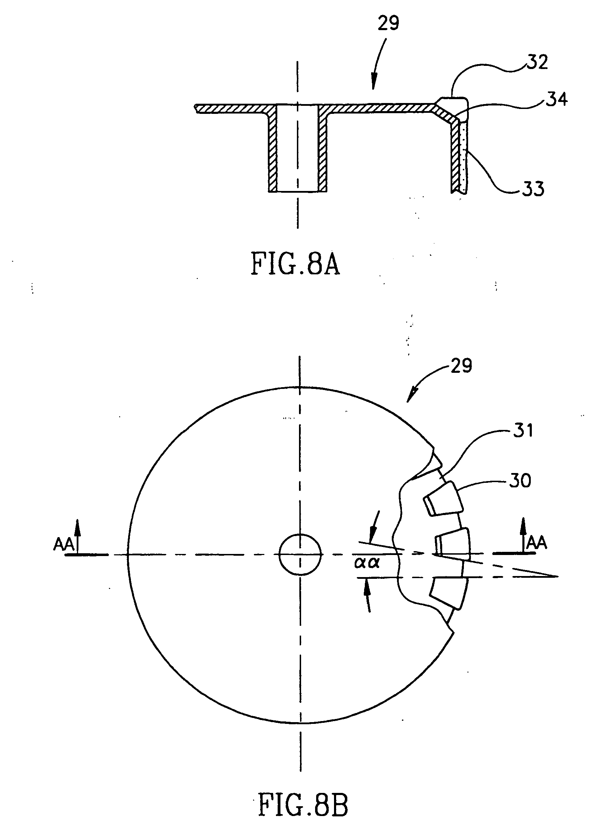

Reference is now drawn to Figs. 8A and 8B, which indicate a preferred embodiment of the self-cleaning wheel 29. Fig. 8A is a cross-section of the preferred embodiment of the wheel, while Fig. 8B is a side view of the entire wheel. Wheel 29 comprises specially shaped teeth 30, which are evenly spaced along the perimeters of the wheel. The teeth 30, are specially shaped as an inverted trapezoid, thus creating a situation in which the space 31 between every two consecutive teeth 30, is narrower at the perimeter where contact is made with the ground and widens inside the perimeter of the wheel (as illustrated by the angle αα). This special design allows mud and cut grass typically clogged between the teeth to flow into the perimeter of the wheel and thus allow the self-cleaning action. In the preferred embodiment, the self cleaning wheel surface 34 located between the main body of the wheel and each tooth 30 is diagonal. This diagonal surface generates a force which pushes the clogged mud and cut grass sideways and eventually out of the wheel. It will be apparent to the professional reader that the diagonal surface augments the self cleaning action of the wheel but is not a necessity, and may also be straight or otherwise shaped.

Mud and cut grass accumulating in the space between two consecutive teeth is forced inside the wheel by pressure from the ground and the pressure of additional mud and out grass on the traveling surface. Since the space between two consecutive teeth becomes wider as the mud and grass move further inside the perimeter, such mud and cut grass clears itself and will naturally fall off the wheel after traveling several millimeters inside the perimeter of the wheel.

Fig. 8A is a cross-section of the preferred embodiment of the self-cleaning wheel. The teeth 30, are indicated in this preferred embodiment as embodying the outer part of the surface of the wheel. The inner part of the surface of the wheel may be covered with rubber or a similar cushioning material 33. This allows the wheel to be equally adequate for motion on paved surfaces as well as on unpaved surfaces, rough surfaces, and grassy surfaces. In alternative embodiments of the invention, teeth 30, may cover the entire perimeter surface of the wheel in a substantially equivalent way.

While the present invention has been described so as to enable one of skill in the art to practice the present invention, the preceding description is exemplary only, and should not be used to limit the scope of the invention. The scope of the invention should be determined by the following claims.

## Claims

1. An apparatus (1) for adjusting to the level of the ground comprising:
a housing member (2), said housing member adapted for accommodating instrumentation and including a main body (2a) in communication with at least one ground contacting member (3); and
a suspension system movably attached to said housing member (2), said suspension system (9,9A) adapted for connection to a chassis, said suspension system adapted for adjusting the level of instrumentation in correspondence with the contour of the ground surface, within said housing member when said ground contacting member is in contact with the ground.

2. The apparatus of claim 1, additionally comprising:
a force applying member (12) in communication with said suspension system (9, 9A), to provide an offsetting force to that produced by said suspension system when said housing member (2) is in contact with the ground.

3. The apparatus of claim 2, wherein said force applying member (12) includes a spring.

4. The apparatus of claim 1, additionally comprising:
a blade, said blade enveloped by said housing member (2) and said blade operatively connected to said suspension system (9, 9A).

5. The apparatus of claim 4, wherein said blade is adapted for cutting grass.

6. The apparatus of claim 1, additionally comprising hinges (9, 9A), said hinges for coupling said housing member to said suspension system.

7. A lawnmower comprising:
a chassis supported by a plurality of rolling members;
a housing member (2), said housing member including a main body (2a) in communication with at least one ground contacting member (3);
a suspension system (9, 9A) movably attached to said housing member (2), said suspension system (9, 9A) operably coupled to said chassis;
a blade, said blade enveloped by said housing member (2) and said blade operatively coupled to said suspension system (9, 9A); and
a force applying member (12) in communication with said suspension system (9, 9A), to provide an offsetting force to that produced by the suspension system (9, 9A) when said at least one ground contacting member (3) is in contact with the ground.

8. The apparatus of claim 7, wherein said force applying member (12) includes a spring.

9. The apparatus of claim 7, wherein said blade is adapted for cutting grass.

10. The apparatus of claim 7, wherein said movable attachment of said housing member to said suspension system includes hinges (9h,9hh).

## Patentansprüche

1. Vorrichtung (1) zum Anpassen an die Höhe des Bodens mit:
einem Gehäuseteil (2), das zum Aufnehmen einer Einrichtung angepaßt ist und einen Hauptkörper (2a) in Verbindung mit mindestens einem bodenberührenden Teil (3) enthält, und
einem Aufhängesystem, das beweglich an dem Gehäuseteil (2) befestigt ist, wobei das Aufhängesystem (9, 9A) zur Verbindung mit einem Chassis angepaßt ist und wobei das Aufhängesystem angepaßt ist, um die Höhe einer Einrichtung in dem Gehäuseteil gemäß der Kontur der Bodenfläche anzupassen, wenn sich das bodenberührende Teil in Kontakt mit dem Boden befindet.

2. Vorrichtung nach Anspruch 1, die zusätzlich aufweist:
ein kraftausübendes Teil (12) in Verbindung mit dem Aufhängesystem (9, 9A), um eine ausgleichende Kraft gegenüber der bereitzustellen, die von dem Aufhängesystem erzeugt wird, wenn sich das Gehäuseteil (2) in Kontakt mit dem Boden befindet.

3. Vorrichtung nach Anspruch 2, bei der das kraftausübende Teil (12) eine Feder enthält.

4. Vorrichtung nach Anspruch 1, die zusätzlich aufweist:
eine Klinge, die von dem Gehäuseteil (2) umgeben ist und die funktional mit dem Aufhängesystem (9, 9A) verbunden ist.

5. Vorrichtung nach Anspruch 4, bei der die Klinge zum Schneiden von Gras angepaßt ist.

6. Vorrichtung nach Anspruch 1, die zusätzlich Anlenkungspunkte (9, 9A) aufweist, die zum Koppeln des Gehäuseteils mit dem Aufhängesystem vorgesehen sind.

7. Rasenmäher mit:
einem Chassis, das von einer Vielzahl von Rollelementen abgestützt wird,
einem Gehäuseteil (2), das einen Hauptkörper (2a) in Verbindung mit mindestens einem bodenberührenden Teil (3) enthält,
einem Aufhängesystem (9, 9A), das beweglich an dem Gehäuseteil (2) befestigt und funktional mit dem Chassis gekoppelt ist,
einer Klinge, die von dem Gehäuseteil (2) umgeben ist und die funktional mit dem Aufhängesystem (9, 9A) gekoppelt ist, und
einem kraftausübenden Teil (12) in Verbindung mit dem Aufhängesystem (9, 9A), um eine ausgleichende Kraft gegenüber der bereitzustellen, die von dem Aufhängesystem (9, 9A) erzeugt wird, wenn sich das mindestens eine bodenberührende Teil (3) in Kontakt mit dem Boden befindet.

8. Vorrichtung nach Anspruch 7, bei der das kraftausübende Teil (12) eine Feder enthält.

9. Vorrichtung nach Anspruch 7, bei der die Klinge zum Schneiden von Gras angepaßt ist.

10. Vorrichtung nach Anspruch 7, bei der die bewegliche Befestigung des Gehäuseteils an dem Aufhängesystem Anlenkungspunkte (9h, 9hh) enthält.

## Revendications

1. Appareil (1) destiné à s'adapter au niveau du sol, comprenant :
un élément de logement (2), ledit élément de logement étant adapté pour loger un équipement et comprenant un corps principal (2a) en communication avec au moins un élément de contact avec le sol (3) ; et
un système de suspension fixé de manière mobile audit élément de logement (2), ledit système de suspension (9, 9A) étant adapté pour une connexion avec un châssis, ledit système de suspension étant adapté pour régler le niveau de l'équipement selon le profil de la surface du sol, à l'intérieur dudit élément de logement, lorsque ledit élément de contact avec le sol est en contact avec le sol.

2. Appareil selon la revendication 1, comprenant en outre :
un élément d'application de force (12) en communication avec ledit système de suspension (9, 9A), destiné à fournir une force de décalage à celle produite par ledit système de suspension lorsque ledit élément de logement (2) est en contact avec le sol.

3. Appareil selon la revendication 2, dans lequel ledit élément d'application de force (12) comprend un ressort.

4. Appareil selon la revendication 1, comprenant en outre :
une lame, ladite lame étant enveloppée par ledit élément de logement (2) et ladite lame étant reliée de manière fonctionnelle audit système de suspension (9, 9A).

5. Appareil selon la revendication 4, dans lequel ladite lame est adaptée pour tondre du gazon.

6. Appareil selon la revendication 1, comprenant en outre des articulations (9, 9A), lesdites articulations étant destinées à coupler ledit élément de logement audit élément de suspension.

7. Tondeuse à gazon, comprenant :
un châssis supporté par une pluralité d'éléments de roulement ;
un élément de logement (2), ledit élément de logement comprenant un corps principal (2a) en communication avec au moins un élément de contact avec le sol (3) ;
un système de suspension (9, 9A) fixé de manière mobile audit élément de logement (2), ledit système de suspension (9, 9A) étant couplé de manière fonctionnelle audit châssis ;
une lame, ladite lame étant enveloppée par ledit élément de logement (2) et ladite lame étant couplée de manière fonctionnelle audit système de suspension (9, 9A) ; et
un élément d'application de force (12) en communication avec ledit système de suspension (9, 9A), destiné à fournir une force de décalage à celle produite par le système de suspension (9, 9A) lorsque ledit au moins un élément de contact avec le sol (3) est en contact avec le sol.

8. Appareil selon la revendication 7, dans lequel ledit élément d'application de force (12) comprend un ressort.

9. Appareil selon la revendication 7, dans lequel ladite lame est adaptée pour tondre du gazon.

10. Appareil selon la revendication 7, dans lequel ladite fixation mobile dudit élément de logement audit système de suspension comprend des articulations (9h, 9hh).
